# FASCICULE DE BREVET EUROPEEN

(11) **EP 1 103 338 B1**
(45) Date de publication et mention de la délivrance du brevet: **30.03.2005**
(21) Numéro de dépôt: 00440308.5
(22) Date de dépôt: 24.11.2000
(51) Int. Cl.: B23P 11/02, B23Q 17/22

(54) **Dispositif d'assemblage d'outils dans le porte-outils par dilatation thermique et de préréglage et de mesure de l'ensemble monté**
Vorrichtung zur Montage eines Schrumpfsitzes von einem Werkzeug in einem Werkzeugträger und zur Voreinstellung und Vermessung des Werkzeugzusammenbaus
Device for assembling tools into tool holders by thermal dilation and for presetting and measuring the resulting tool assembly

(30) Priorité: 26.11.1999 FR 9914946
(43) Date de publication de la demande: 30.05.2001
(73) Titulaire: E.P.B., 67330 Bouxwiller (FR)
(72) Inventeur: Freyermuth, Alain, 67350 Pfaffenhoffen (FR); Mallet, Laurent, 67340 Ingwiller (FR)
(74) Mandataire: Nuss, Pierre

(56) Documents cités:
- EP-A- 0 247 939
- DE-U- 29 820 838
- FR-A- 2 768 071
- FR-A- 2 768 072

## Description

La présente invention concerne le domaine de l'environnement des machines-outils, en particulier des machines à commande numérique, des centres d'usinage, des machines ou ligne transfert, pour l'usinage à grande vitesse ou pour lesquelles des grandes précisions dimensionnelles et de concentricité sont requises, et a pour objet un dispositif d'assemblage d'outils dans le porte-outils par dilatation thermique et de préréglage et de mesure de l'ensemble monté.

Il existe actuellement différents dispositifs permettant d'assembler par frettage un outil dans le porte-outil. Ces dispositifs de frettage d'ensembles porte-outils - outils, avec intervention manuelle ou automatisé pour l'emmanchement, ne permettent, cependant, pas la prise de mesure ou la mise en position précise et le contrôle d'un outil, ce qui, dans le contexte d'utilisation industrielle et de préparation d'outil actuels, devient indispensable.

On connaît également des machines de préréglage, encore appelées bancs de préréglage ou de mesure permettant de mesurer un outil, mais ces bancs sont autonomes et ne sont généralement pas adaptés à un frettage d'outils dans des porte-outils. Par conséquent il est nécessaire de manipuler les ensembles porte-outils - outils plusieurs fois pour accéder aux informations nécessaires à la bonne connaissance desdits ensembles.

On connaît également, par FR-A-2 768 071 une machine à fretter destinée spécifiquement à des opérations d'assemblage et de désassemblage d'outils dans un porte-outils. Ce document ne décrit aucun moyen de mesure et il est donc nécessaire de procéder spécifiquement aux opérations de mesure.

Par ailleurs, FR-A-2 768 072 décrit une machine de préréglage et d'équilibrage de porte-outils qui réalise une mesure dimensionnelle et de balourd d'outils montés.

D'après ce document, il n'est pas possible de réaliser une mesure pendant le montage des outils, ceux-ci étant montés préalablement avant le contrôle dimensionnel et la mesure du balourd.

La présente invention a pour but de pallier ces inconvénients en proposant un dispositif d'assemblage d'outils dans le porte-outils par dilatation thermique et de préréglage et de mesure de l'ensemble monté permettant le montage et le démontage des outils, ainsi que la mise en place précise dans le sens longitudinal ou la mesure des cotes outils, et ceci sans déplacement de l'ensemble ainsi monté, en une opération unique.

A cet effet, le dispositif d'assemblage d'outils dans le porte-outils par dilatation thermique et de préréglage et de mesure de l'ensemble monté est caractérisé en ce qu'il est essentiellement constitué par un bâti support muni d'une douille porte-outils interchangeable, par au moins une colonne supportant un bras de mesure dimensionnelle et un inducteur, par une console d'affichage des mesures, par un pupitre de commande et par un dispositif de réglage précis de la longueur de sortie de l'outil et en ce que le bras de mesure dimensionnelle se présente préférentiellement sous forme d'un support d'un ensemble projecteur ou caméra et moyen d'éclairage épiscopique ou diascopique, ou de tout autre dispositif de visualisation d'une position d'outil, cet ensemble étant monté de manière déplaçable suivant des axes X et Z, c'est-à-dire parallèlement à l'axe de la colonne et perpendiculairement à cette colonne dans le sens d'un rapprochement ou d'un éloignement suivant des plans parallèles à cette dernière, ce sans possibilité de déplacement directement dans le champ de positionnement du porte-outil et de l'outil et dans le champ d'action de l'inducteur.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une vue en élévation frontale du dispositif conforme à l'invention, et
la figure 2 est une vue en élévation latérale du dispositif suivant la figure 1.

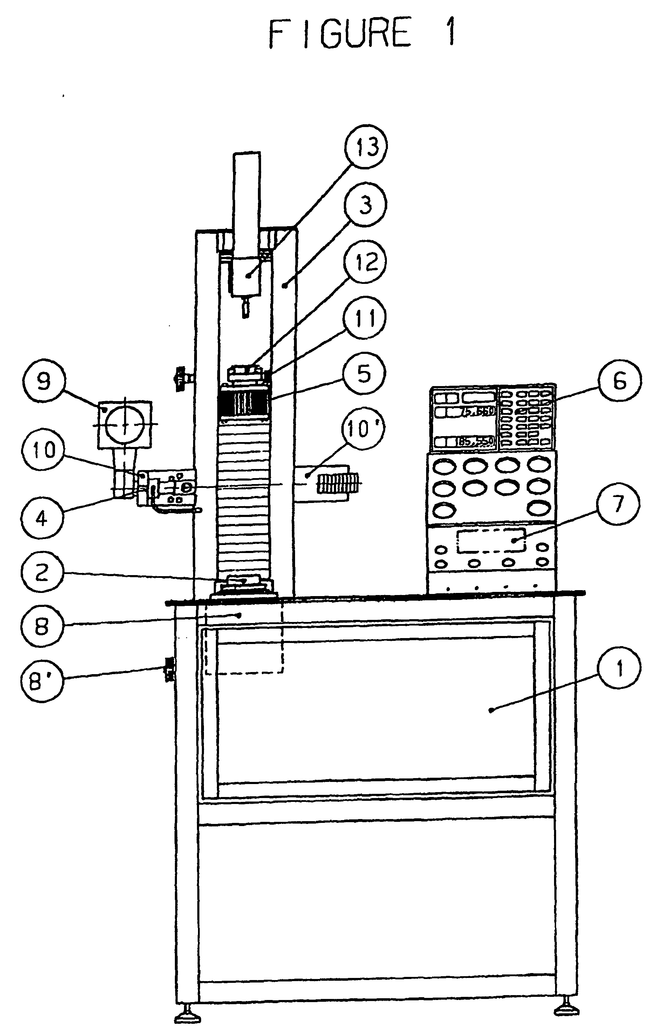

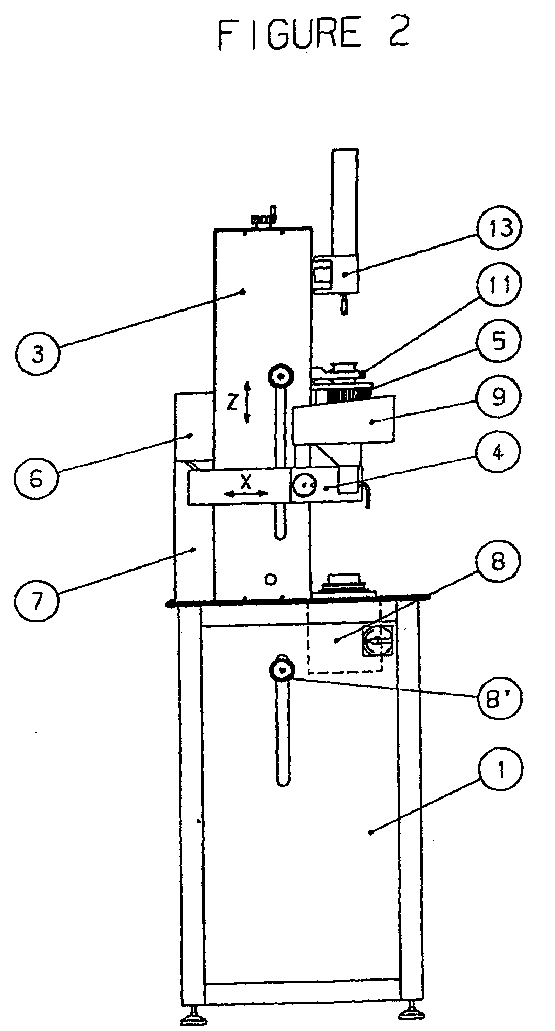

Les figures 1 et 2 des dessins annexés représentent, à titre d'exemple, un dispositif d'assemblage d'outils dans le porte-outils par dilatation thermique et de préréglage et de mesure de l'ensemble monté, qui est essentiellement constituée par un bâti support 1 muni d'une douille porte-outils interchangeable 2, par au moins une colonne 3 supportant un bras de mesure dimensionnelle 4 et un inducteur 5, par une console 6 d'affichage des mesures, par un pupitre de commande 7 et par un dispositif 8 de réglage précis de la longueur de sortie de l'outil. Dans le mode de réalisation représenté aux figures 1 et 2, le dispositif conforme à invention se présente sous forme d'un banc vertical.

La console 6 d'affichage des mesures et le pupitre de commande 7 sont avantageusement fixés latéralement à la colonne 3 sur le bâti support 1.

Le bras de mesure dimensionnelle 4 se présente préférentiellement sous forme d'un support d'un ensemble projecteur ou caméra 9 et moyen d'éclairage épiscopique 10 ou diascopique 10', ou de tout autre dispositif de visualisation d'une position d'outil, cet ensemble étant monté de manière déplaçable suivant des axes X et Z (figure 2), c'est-à-dire parallèlement à l'axe de la colonne 3 et perpendiculairement à cette colonne 3 dans le sens d'un rapprochement ou d'un éloignement suivant des plans parallèles à cette dernière, ce sans possibilité de déplacement directement dans le champ de positionnement du porte-outil et de l'outil et dans le champ d'action de l'inducteur 5. Ainsi, le bras de mesure dimensionnelle 4 permet de déplacer le dispositif de visualisation autour de l'ensemble outil - porte-outil, sans pour autant risquer de gêner des manoeuvres éventuelles de mise en place ou de retrait de cet ensemble, ni de gêner pendant les opérations de frettage.

L'inducteur 5 est monté, de manière connue, sur un coulisseau guidé sur la colonne 3 dans un déplacement vertical suivant l'axe Z (figures 1 et 2), ce déplacement, manuel ou automatisé, et le réglage correspondant étant totalement indépendants des déplacements et réglages du bras de mesure dimensionnelle 4 et de l'ensemble projecteur ou caméra 9 et moyen d'éclairage épiscopique 10 ou diascopique 10', ou analogue.

Selon une caractéristique de l'invention, en vue de l'automatisation du dispositif, ce dernier peut être complété, comme le montre plus particulièrement la figure 1 des dessins annexés, par un porte-canons 11 à canons interchangeables 12. Ainsi, il est possible d'effectuer une alimentation automatique du dispositif, d'une part avec des portes-outils directement dans la douille interchangeable 2 et, d'autre part, avec des outils de différents calibres, par coopération avec les canons interchangeables 12 du porte-canons 11, par exemple par l'intermédiaire d'un bras robotisé ou d'un coulisseau muni d'une pince d'extraction, ledit coulisseau étant monté sur la colonne 3.

De manière connue, la partie du dispositif spécifique au frettage comprend, outre l'inducteur 5, un ensemble d'emmanchement éclipsable 13 monté de manière déplaçable sur la colonne 3, à l'extrémité supérieure de cette dernière. Cet ensemble d'emmanchement est destiné à réaliser une introduction assistée de la queue de l'outil dans le porte-outil préalablement chauffé par induction.

Le dispositif 8 de réglage précis de la longueur de sortie de l'outil, qui n'est pas représenté en détail aux dessins annexés, se présente avantageusement, sous forme d'un moyen de butée disposé dans le bâti 1, dont l'ensemble de commande est situé sous la douille porte-outil interchangeable 2 et dont l'organe de butée peut pénétrer à travers cette douille dans un perçage central du porte-outil, ce moyen de butée étant actionnable par l'intermédiaire d'une molette 8' ou analogue débouchant sur un côté ou sur la face dudit bâti 1.

Selon une caractéristique de l'invention, ce dispositif de réglage peut être un dispositif mécanique à entraînement manuel par la molette 8'. Cependant, il est également possible de réaliser le dispositif de réglage 8 sous forme d'un dispositif à entraînement électrique ou hydraulique, dont l'actionnement est réalisé par impulsion au moyen de la molette 8'.

Un tel dispositif 8 permet de régler précisément la position axiale de l'outil, en fonction des éléments de positionnement relevés par l'intermédiaire de l'ensemble projecteur ou caméra 9 et moyen d'éclairage épiscopique 10 ou diascopique 10', ou analogue et restitués par la console 6 d'affichage des mesures, le pupitre de commande 7 permettant l'affichage sur ladite console 6 des valeurs de consigne.

Le bâti support 1 est avantageusement, de manière connue, sous forme d'une structure mécano-soudée, sur laquelle sont fixés respectivement la colonne 3 avec la douille porte-outil interchangeable 2 et le dispositif de réglage 8 et le pupitre de commande 7 avec la console 6.

Grâce à l'invention, il est possible de réaliser une machine de frettage et de préréglage ainsi que de mesure d'un ensemble porte-outil - outil adapté à un grand nombre de machines-outils ou de centres d'usinage ou analogue et permettant d'effectuer sans démontage, ni déplacement intermédiaire, ni changement de poste de réglage, les deux opérations de frettage et de préréglage et mesure.

Il en résulte un important gain de temps d'intervention et une simplification des procédures, les deux opérations pouvant être réalisées simultanément au même poste de travail.

En outre, l'invention permet également l'obtention d'un gain de place en atelier du fait de la combinaison de deux opérations distinctes, réalisées à ce jour sur des machines distinctes, sur une machine unique entraînant une réduction correspondante de la surface nécessaire.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention, telle que défini dans les revendications.

## Revendications

1. Dispositif d'assemblage d'outils dans le porte-outils par dilatation thermique et de préréglage et de mesure de l'ensemble monté **caractérisé en ce qu'**il est essentiellement constitué par un bâti support (1) muni d'une douille porte-outils interchangeable (2), par au moins une colonne (3) supportant un bras de mesure dimensionnelle (4) et un inducteur (5), un ensemble projecteur ou caméra (9) et moyen d'éclairage épiscopique (10) ou diascopique (10'), ou de tout autre dispositif de visualisation d'une position d'outil par une console (6) d'affichage des mesures, par un pupitre de commande (7) et par un dispositif (8) de réglage précis de la longueur de sortie de l'outil et **en ce que** le bras de mesure dimensionnelle (4) se présente préférentiellement sous forme d'un support de l'ensemble (9, 10), cet ensemble étant monté de manière déplaçable suivant des axes X et Z (figure 2), c'est-à-dire parallèlement à l'axe de la colonne (3) et perpendiculairement à cette colonne (3) dans le sens d'un rapprochement ou d'un éloignement suivant des plans parallèles à cette dernière, ce sans possibilité de déplacement directement dans le champ de positionnement du porte-outil et de l'outil et dans le champ d'action de l'inducteur (5).

2. Dispositif, suivant la revendication 1, **caractérisé en ce qu'**il est complété par un porte-canons (11) à canons interchangeables (12).

3. Dispositif, suivant la revendication 1, **caractérisé en ce qu'**il est pourvu, en outre, d'un bras robotisé ou d'un coulisseau muni d'une pince d'extraction, ledit coulisseau étant monté sur la colonne (3).

4. Dispositif, suivant la revendication 1, **caractérisé en ce que** le dispositif (8) de réglage précis de la longueur de sortie de l'outil se présente sous forme d'un moyen de butée disposé dans le bâti (1), dont l'ensemble de commande est situé sous la douille porte-outil interchangeable (2) et dont l'organe de butée peut pénétrer à travers cette douille dans un perçage central du porte-outil, ce moyen de butée étant actionnable par l'intermédiaire d'une molette (8') ou analogue débouchant sur un côté ou sur la face dudit bâti (1).

5. Dispositif, suivant la revendication 4, **caractérisé en ce que** le dispositif de réglage (8) est un dispositif mécanique à entraînement manuel par la molette (8').

6. Dispositif, suivant la revendication 5, **caractérisé en ce que** le dispositif de réglage (8) est sous forme d'un dispositif à entraînement électrique ou hydraulique, dont l'actionnement est réalisé par impulsion au moyen de la molette (8').

## Patentansprüche

1. Vorrichtung zur Montage von Werkzeugen im WerkzeugTräger mittels thermischer Dehnung und zur Voreinstellung und Vermessung des Werkzeugzusammenbaus, **dadurch gekennzeichnet, dass** sie im Wesentlichen gebildet wird aus einem mit einer austauschbaren Werkzeug-Träger-Fassung (2) versehenen TragGestell (1), wenigstens einer Säule (3), welche einen Dimensions-Mess-Arm (4) und einen Induktor (5) trägt, einem Projektions-Ensemble oder einer Kamera (9), und einer episkopartigen Beleuchtungs-Vorrichtung (10) oder diaskopartigen Beleuchtungs-Vorrichtung (10') oder einer anderen Vorrichtung zum Visualisieren einer Werkzeug-Position, einer Konsole (6) zum Anzeigen von Maßen, einem Steuer-Pult (7) und einer Vorrichtung (8) zum präzisen Einstellen der Länge des Überstandes des Werkzeuges, und dadurch, dass der Dimensions-Mess-Arm (4) vorzugsweise in Form eines Trägers des Ensembles (9,10) ausgeführt ist, wobei dieses Ensemble in einer entlang X- und Z-Achsen (Figur 2) verstellbaren Weise, das heißt parallel zu der Säule (3) und senkrecht zu dieser Säule (3) im Sinne eines Annäherns oder eines Entfernens entlang Ebenen parallel zu letzterer, befestigt ist, ohne die Möglichkeit eines direkten Verstellens im Bereich der Positionierung des Werkzeug-Trägers und des Werkzeuges und im Arbeitsbereich des Induktors (5).

2. Vorrichtung gemäß Anspruch 1, **dadurch gekennzeichnet, dass** sie mit einem Hülsen-Träger (11) mit auswechselbaren Hülsen versehen ist.

3. Vorrichtung gemäß Anspruch 1, **dadurch gekennzeichnet, dass** sie, andererseits, mit einem Roboter-Arm oder einem mit einer Extraktions-Zange versehenen Schieber versehen ist, wobei dieser Schieber an der Säule (3) befestigt ist.

4. Vorrichtung gemäß Anspruch 1, **dadurch gekennzeichnet, dass** die Vorrichtung (8) zum präzisen Einstellen der Länge des Überstandes des Werkzeuges in Form eines am/im Gestell (1) angeordneten Anschlag-Mittels ausgeführt ist, wobei die Steuereinheit unter der austauschbaren Werkzeug-Träger-Fassung (2) angeordnet ist, und wobei das Anschlag-Organ durch diese Fassung hindurch in eine zentrale Bohrung des Werkzeug-Trägers eindringen kann, wobei dieses AnschlagMittel mit Hilfe eines Rändelrades (8') oder dergleichen betätigbar ist, welches an einer Seite oder an der Vorderseite des genannten Gestells (1) angeordnet ist oder vorsteht.

5. Vorrichtung gemäß Anspruch 4, **dadurch gekennzeichnet, dass** die Vorrichtung (8) zum Einstellen eine mechanische Vorrichtung zum manuellen Betätigen mit Hilfe des Rändelrades (8') ist.

6. Vorrichtung gemäß Anspruch 5, **dadurch gekennzeichnet, dass** die Vorrichtung zum Einstellen (8) in Form einer elektrisch oder hydraulisch angetriebenen Vorrichtung ausgeführt ist, deren Betätigung durch Einwirkung mittels des Rändelrades (8') auslösbar ist.

## Claims

1. Device for assembling tools in a tool holder by thermal expansion and preadjustment and measuring of the mounted assembly, **characterised in that** it essentially comprises a support frame (1) provided with an interchangeable tool-holding socket (2), at least one column (3) supporting a dimension-measuring arm (4) and an inductor (5), a projector or camera assembly (9) and episcopic illumination means (10) or diascopic illumination means (10'), or any other device for visualising a tool position, a console (6) for displaying measurements, a control panel (7) and a device (8) for the precise adjustment of the outwardly extending length of the tool, and **in that** the dimension-measuring arm (4) is preferably in the form of a support of assembly (9) and means (10), this assembly being mounted so as to be displaceable along axes X and Z (Fig. 2), i.e. parallel to the axis of the column (3) and perpendicularly to this column (3), in the direction moving toward or away from it along planes parallel to said column, without the possibility of direct displacement into the field for positioning the tool-holder and the tool, and into the field of action of the inductor (5).

2. Device according to claim 1, **characterised in that** it is supplemented with a shank carrier (11) with interchangeable shanks (12).

3. Device according to claim 1, **characterised in that** it is also provided with an automated arm or a slide equipped with an extraction gripper, said slide being mounted on the column (3).

4. Device according to claim 1, **characterised in that** the device (8) for precise adjustment of the outwardly extending length of the tool is in the form of a stop means arranged in the frame (1), the control assembly of which is located below the interchangeable tool-holding socket (2) and the stop member of which may penetrate through this socket into a central bore in the tool holder, this stop means being actuable via a knob (8') or the like opening onto a side or onto the surface of said frame (1).

5. Device according to claim 4, **characterised in that** the adjustment device (8) is a mechanical device that is driven manually using the knob (8').

6. Device according to claim 5, **characterised in that** the adjustment device (8) is in the form of an electric or hydraulic drive device, which is actuated by an impetus by means of the knob (8').
